# FASCICULE DE BREVET EUROPEEN

(11) **EP 3 069 290 B1**
(45) Date de publication et mention de la délivrance du brevet: **18.07.2018**
(21) Numéro de dépôt: 14798815.8
(22) Date de dépôt: 12.11.2014
(51) Int. Cl.: G06F 21/32, G06F 21/34, G07C 9/00, G06F 17/30

(54) **PROCEDE ET SYSTEME DE CONTROLE LORS DE L'ACCES OU LA SORTIE D'UNE ZONE**
VERFAHREN UND VORRICHTUNG ZUR STEUERUNG DES ZUGANGS ZU ODER AUSGANG AUS EINEM BEREICH
METHOD AND SYSTEM FOR CONTROLLING ACCESS TO OR THE EXIT FROM AN AREA

(30) Priorité: 12.11.2013 FR 1361019
(43) Date de publication de la demande: 21.09.2016
(73) Titulaire: Morpho, 92130 Issy-les-Moulineaux (FR)
(72) Inventeur: LAMBERT, Laurent, F-92130 Issy les Moulineaux (FR); TOURET, Olivier, F-92130 Issy les Moulineaux (FR); CHASTEL, Pierre, F-92130 Issy les Moulineaux (FR)
(74) Mandataire: Regimbeau
(86) Numéro de dépôt international: PCT/EP2014/074395
(87) Numéro de publication internationale: WO 2015/071325

(56) Documents cités:
- WO-A1-2006/041416
- WO-A1-2009/128060
- US-A1- 2012 213 417

## Description

### DOMAINE DE L'INVENTION

L'invention concerne le domaine des procédés et systèmes de contrôle d'individus empruntant un véhicule ou tout autre moyen de transport, lors de l'entrée ou la sortie d'une zone contrôlée.

L'invention s'applique notamment au contrôle d'individus au franchissement de la frontière d'un pays.

### ETAT DE LA TECHNIQUE

Il est répandu de procéder à des contrôles d'identités d'individus lors du passage d'une frontière, qu'elle soit terrestre, aérienne, maritime, ou fluviale, pour entrer à l'intérieur d'un pays.

Les technologies biométriques peuvent être utilisées dans ce contexte, sur des citoyens du pays et/ou des tiers nationaux. Par exemple, il peut être réalisé une authentification biométrique entre une donnée biométrique identitaire certifiée qui peut être stockée dans un document d'identité et une donnée biométrique de vérification de passage acquise en temps réel sur l'individu à contrôler.

Dans certains cas, une biométrie identitaire certifiée peut être acquise lors de l'entrée dans un pays, notamment afin de faire des recherches sur des bases de données biométriques de sécurité. Par « biométrie identitaire certifiée », on entend que cette biométrie est acquise dans un environnement contrôlé notamment en présence d'un agent de l'état qui contrôle les éléments justifiant l'identité déclarée de l'individu lors de cet enrôlement biométrique.

Cependant le contrôle d'identité biométrique d'individus sortant du pays est bien plus rarement mis en oeuvre, et il est donc impossible de réconcilier les informations collectées en sortie avec les informations collectées en entrée du pays, ce qui permettrait une gestion plus efficace des mouvements transfrontaliers et des durées d'autorisation de résidence sur le territoire.

De plus, le contrôle d'identité des individus de manière biométrique est encore plus difficile à mettre en oeuvre dans un contexte de frontière terrestre, où les passagers se trouvent dans des véhicules et où le débit de franchissement de la frontière peut être élevé.

En effet, le fait de réaliser une identification biométrique des passagers des véhicules peut supposer d'imposer aux passagers de descendre du véhicule, ce qui perturbe fortement le trafic, ou, même dans le cas où il n'est pas nécessaire de descendre du véhicule, le temps nécessaire pour procéder à l'identification peut ralentir le flux.

Il a été proposé d'équiper les véhicules de puces RFID pour pouvoir détecter leur franchissement de la frontière. Cependant ce procédé ne permet pas de contrôler les passagers des véhicules et ne permet pas de mettre en oeuvre de contrôle systématique puisque seuls les véhicules équipés peuvent être contrôlés.

Dans l'état de l'art actuel, il n'est donc aujourd'hui pas possible de contrôler de manière biométrique la totalité ou même une forte proportion de passagers traversant une frontière terrestre notamment avec leurs véhicules et devant être contrôlés selon la loi du pays (par exemple les tiers nationaux, non citoyens du pays), alors que cela serait fort utile pour les besoins de réconciliation et de gestion des frontières mentionnés plus haut.

Il existe donc un besoin pour proposer un procédé de contrôle de passagers de véhicules rapide, efficace, et sûr.

On connaît du document WO 2009/128060 un procédé de contrôle d'individus à l'entrée d'une zone contrôlée, comprenant l'acquisition d'identifiants d'un téléphone mobile d'un individu, le cas échéant en lien avec des données d'identité de l'individu et un identifiant de véhicule.

Les données récupérées sont enregistrées dans une base de données.

Le procédé proposé dans ce document est un pur procédé de collection, et les cas échéant de mise à disposition de données, liées à l'utilisation de téléphones mobiles.

Le procédé décrit n'est adapté ni au contrôle de flux de véhicules entrant ou sortant d'une zone contrôlée, ni au contrôle d'identité des individus voyageant dans ces véhicules.

### PRESENTATION DE L'INVENTION

L'invention a pour but de proposer un procédé de contrôle de passagers d'un véhicule lors de l'entrée ou la sortie d'une zone contrôlée tel qu'un état, ne présentant pas les inconvénients de l'art antérieur.

Un autre but de l'invention est de permettre de contrôler les passagers de manière rapide, et, sans imposer aux passagers de descendre de voiture par exemple dans le cas d'une frontière terrestre très fréquentée.

Un autre but encore de l'invention est également de pouvoir faire le lien, lien renforcé notamment par le moyen de contrôles biométriques, entre l'entrée d'individus dans une zone contrôlée et leur sortie.

A cet égard, l'invention a pour objet un procédé de contrôle d'individus à l'entrée ou la sortie d'une zone contrôlée, mis en oeuvre dans un système comprenant au moins une base de données comprenant :
- un ensemble de premières données dites de vérification de passage, comprenant des données biométriques d'individus en lien avec des identifiants de moyens de transport ou de voyages, et
- un ensemble de secondes données dites données identitaires certifiées comprenant au moins une donnée d'état civil et/ou de document d'identité et au moins une donnée biométrique d'individus,
le procédé étant caractérisé par la mise en oeuvre des étapes consistant à :
- pour chaque véhicule, acquérir un identifiant de moyen de transport ou de voyage, et une donnée biométrique de vérification de passage d'au moins un passager du véhicule,
- pour chaque passager pour lequel une donnée biométrique de vérification de passage a été acquise, déterminer si ledit passager est enregistré sur l'ensemble de données de vérification de passage en lien avec le véhicule,
- si un passager n'est pas enregistré dans l'ensemble de données de vérification de passage en lien avec le véhicule, vérifier que le passager est enregistré dans ledit ensemble en lien avec un autre véhicule, ou, à défaut, qu'il est enregistré dans l'ensemble de données identitaires certifiées, et
- en fonction du résultat de la vérification mise en oeuvre, mettre à jour l'ensemble de données de vérification de passage de sorte qu'il comprenne une donnée biométrique du passager en lien avec le véhicule.

Avantageusement, mais facultativement, le procédé selon l'invention peut en outre comprendre au moins l'une des caractéristiques suivantes : la donnée biométrique de chaque passager est acquise à la volée.
- la donnée biométrique acquise à la volée est une image d'iris.
- la vérification que l'individu est enregistré dans l'ensemble de premières données en lien avec un autre véhicule comprend la mise en oeuvre d'une étape de comparaison entre la donnée d'identité du passager et l'ensemble des données d'identité stockées dans ledit ensemble.
- la vérification du fait qu'un passager est enregistré dans l'ensemble de secondes données si le passager n'est pas enregistré dans l'ensemble de données de vérification de passage comprend l'authentification biométrique du passager, par comparaison d'une donnée biométrique d'authentification du passager à une donnée biométrique identitaire certifiée du passager, les biométries d'authentification et identitaire certifiée étant des données acquises sur des traits biométriques de même nature.
- Le procédé comprend en outre, préalablement à l'étape d'authentification biométrique, l'acquisition d'une donnée d'un document d'identité du passager, et l'accès à une donnée biométrique identitaire certifiée du passager dans l'ensemble de secondes données par comparaison entre ladite donnée du document d'identité et une donnée de document d'identité de l'ensemble de secondes données.
- les données de documents d'identité comparées comprennent chacune une chaine de caractères, et la comparaison mise en oeuvre comprend l'établissement d'un score de vraisemblance entre des données comparées, et la comparaison du score à un seuil prédéterminé.
- l'ensemble de secondes données comprend des données biométriques enregistrées dans des documents d'identité d'individus, et l'étape d'authentification biométrique est mise en oeuvre par comparaison d'une donnée biométrique acquise sur l'individu avec une donnée biométrique identitaire certifiée stockée dans un document d'identité dudit individu.
- la vérification du fait qu'un passager est enregistré dans l'ensemble de secondes données si le passager n'est pas enregistré dans l'ensemble de premières données comprend l'identification biométrique du passager par comparaison entre une donnée biométrique acquise sur l'individu et les données biométriques identitaires certifiées enregistrées dans l'ensemble de secondes données.
- Le procédé comprend une étape consistant à diriger le véhicule vers une zone d'inspection dans les cas où l'ensemble de secondes données ne comprend pas de données concernant un passager, ou un passager ne dispose d'aucun document d'identité, ou dont une authentification biométrique a échoué.
- l'étape de mise à jour de l'ensemble de premières données comprend l'enregistrement d'un identifiant du véhicule en lien avec une donnée biométrique du passager déjà enregistrée dans ledit ensemble, ou l'enregistrement de la donnée biométrique du passager et de l'identifiant du véhicule, en lien avec la donnée.
- chaque passager est enrôlé dans l'ensemble de secondes données lors d'une entrée des individus dans ladite zone.
- le procédé est appliqué à l'un ou aux deux passagers des sièges avant d'un véhicule du type automobile.
- Le procédé comprend en outre la suppression de données d'identité de vérification de passage lorsque ces données ont été associées à un véhicule ou un voyage pendant un laps de temps excédent un seuil prédéterminé, ou lorsque le nombre de données d'identité associées à un véhicule ou un voyage excède un seuil prédéterminé.

L'invention a également pour objets un système de contrôle dans un véhicule à l'entrée ou la sortie d'une zone contrôlée, comprenant :
- au moins une base de données comprenant :
   ∘ un ensemble de premières données dites de vérification de passage, comprenant au moins des données biométriques d'individus en lien avec des identifiants de moyens de transport ou de voyages,
   ∘ un ensemble de secondes données dites « données identitaires certifiées » comprenant au moins des données d'état civil, de documents d'identité et biométriques d'individus,
- au moins un capteur de données biométriques,
- un dispositif d'acquisition d'un identifiant de moyen de transport ou de voyage, et
- une unité de traitement, configurée pour commander le capteur et pour communiquer la base de données, pour mettre en oeuvre le procédé selon la présentation qui précède.

Avantageusement, mais facultativement, le système de contrôle selon l'invention peut en outre comprendre au moins l'une des caractéristiques suivantes :
- les ensembles de premières et secondes données sont stockés dans des bases de données disjointes.
- le capteur de données biométriques est un capteur biométriques à la volée de traits biométriques comprenant : une image d'iris, de rétine, d'empreinte digitale, de paume, de réseau veineux, de visage ou de voix.

L'invention a également pour objet un procédé d'enrôlement préalable d'un individu dans un système selon la présentation qui précède, le procédé comprenant l'enregistrement dans l'ensemble de premières données d'un identifiant du véhicule de l'individu en lien avec une donnée d'identité dudit individu.

L'invention a enfin pour objet un produit programme d'ordinateur, comprenant des instructions de code adaptées pour la mise en oeuvre du procédé selon la présentation qui précède, lorsqu'elles sont exécutées par une unité de traitement.

Le procédé proposé permet de contrôler très rapidement des passagers empruntant un moyen de transport (par exemple un véhicule automobile) puisque, pour tous les passagers enregistrés et ayant déjà subi un même contrôle à bord du même moyen de transport, le procédé se résume à une comparaison « 1 : 1 » ou « 1 : few », c'est-à-dire à une comparaison entre une ou plusieurs données d'identité biométriques déjà enregistrées du ou d'un nombre limité de passagers en lien avec ce moyen de transport et une ou plusieurs données biométriques acquises lors du contrôle de ce ou ces mêmes passagers au franchissement de la zone.

Si l'individu a changé de moyen de transport, le contrôle consiste à réaliser une comparaison « 1 : n » entre la donnée biométrique de passage acquise sur l'individu et l'ensemble des données d'identités et biométriques enregistrées dans le système.

Si les données biométriques de l'individu acquises lors du passage n'ont pas été enregistrées, alors le procédé permet de procéder à l'enregistrement de ces données biométriques dans l'ensemble de données de vérification de passage de la base de données après avoir validé l'identité de cet individu au regard des données biométriques identitaires certifiées.

La mise en oeuvre de ce procédé de façon répétée sur le flux de véhicules à contrôler permet aussi de compléter au fur et à mesure les premières données dites de vérification de passage, afin que de plus en plus de personnes soient enregistrées dans la base en lien avec un ou plusieurs moyens de transport, et qu'ainsi le temps moyen de franchissement du poste de contrôle diminue.

Enfin, le procédé proposé permet de faire un lien entre l'entrée et la sortie d'une zone par un même individu.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- La figure 1 représente schématiquement un système pour la mise en oeuvre d'un procédé de contrôle.
- La figure 2 représente schématiquement les principales étapes du procédé de contrôle selon un mode de réalisation de l'invention.
- La figure 3 représente schématiquement les principales étapes d'un procédé d'enrôlement dans un tel système.

### DESCRIPTION DETAILLEE D'AU MOINS UN MODE DE REALISATION DE L'INVENTION.

### Système de contrôle

Avantageusement, le système de contrôle se trouve au niveau de l'entrée ou de la sortie d'une zone contrôlée.

Dans un mode de réalisation préféré, la zone contrôlée est un pays, et le système de contrôle se trouve à la frontière du pays. Selon un mode alternatif de réalisation, la zone contrôlée est un site privé ou administratif hautement sécurisé (site industriel tel qu'une centrale nucléaire, le site d'une agence gouvernementale, etc. ...).

Dans ce contexte, l'entrée ou la sortie de la zone par un passager est réalisée à bord d'un véhicule, qui peut être terrestre, maritime, aérien, fluvial, etc.

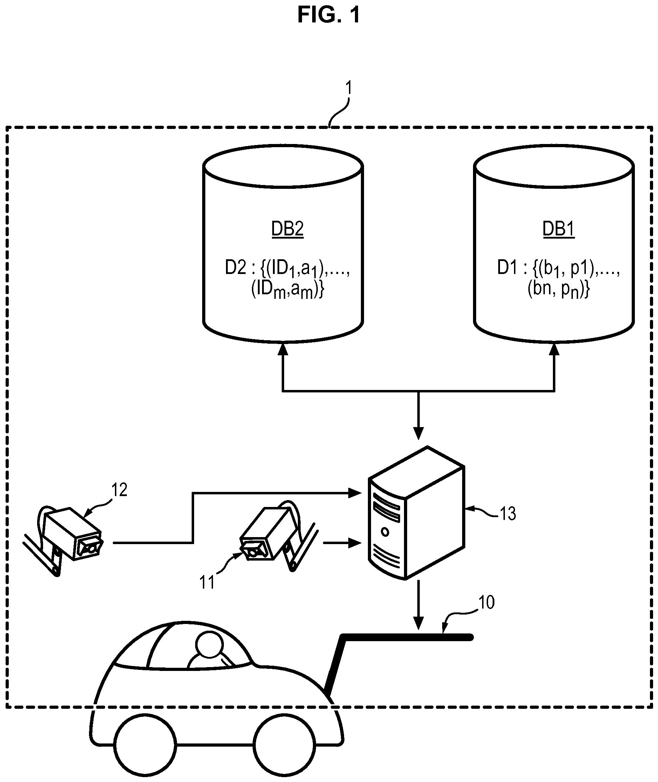

En référence à la figure 1, on a représenté schématiquement un système de contrôle 1 pour contrôler l'accès ou la sortie d'individus de la zone contrôlée.

Le système 1 se situe à l'entrée ou à la sortie d'une zone contrôlée, et le point de contrôle mis en oeuvre par le système 1 est matérialisé par un point de contrôle, une barrière 10, un portique ou tout équivalent pour matérialiser le franchissement de la zone.

Cependant certains éléments du système peuvent être distants et être accessibles par un réseau de télécommunications tel qu'Internet.

Le système 1 comprend au moins une base de données capable de stocker :
- un ensemble de premières données D1, dites données de vérification de passage, comprenant des identifiants de moyens de transport et/ou de voyages, et des données d'identité.

Ces données sont dites de vérification de passage car elles sont acquises lors d'un contrôle à l'entrée ou à la sortie de la zone contrôlée, avantageusement de manière rapide, voire à la volée, comme décrit ci-après.
- Un ensemble de secondes données D2, dites données identitaires certifiées, comprenant typiquement des données d'état civil d'individus, des données biométriques identitaires, et des données de documents d'identité.

Ces données sont dites données identitaires certifiées car, pour l'enrôlement d'un individu dans cet ensemble de données, les données sont acquises sous le contrôle d'un agent d'autorité, qui vérifie que l'identité de l'individu renseignée sur son document d'identité correspond bien à l'individu sur qui sont acquises les données biométriques, de sorte que toutes les données associées aux données d'état civil sont réputées correspondre à l'identité dudit état civil.

Ainsi, cet enrôlement peut avoir lieu par exemple lors d'un premier accès des passagers à la zone (par exemple lors de l'entrée dans un pays), le procédé de contrôle étant alors mis en oeuvre à la sortie de la zone ou lors d'une réentrée postérieure.

On va maintenant décrire plus en détails les structures des deux ensembles de données D1, D2.

L'ensemble de premières données D1 comprend, des données d'identité d'individus b₁,...bₙ, associées avec des identifiants de moyens de transport ou de voyage p₁,...,pₙ. Les données d'identité d'individus sont avantageusement des données biométriques, mais peuvent également être des données d'identité figurant sur un document d'identité tel qu'un numéro de passeport ou de carte d'identité.

Toutes les données biométriques de cet ensemble D1 sont des acquisitions numériques de traits biométriques de même nature. Les données biométriques sont ainsi avantageusement des images d'iris ou des acquisitions d'empreintes digitales, ou bien encore des images de visages.

Par véhicule on entend tout type de véhicules relevant indifféremment des secteurs ferroviaire, routier, maritime, fluvial, ou aérien, quelle que soit sa contenance. Ainsi, par véhicule on entend indifféremment tout véhicule de particuliers (voitures, motos, bateaux, etc..) ainsi que tout véhicule non individuel ou tout moyen de transport collectif, susceptible d'être empruntés par de nombreux voyageurs (avions, paquebots, trains, bus, etc...).

Les identifiants de moyens de transport ou de voyage p₁,...,pₙ sont choisis de sorte à permettre l'identification soit :
- dudit véhicule par lequel les individus pénètrent dans la zone contrôlée quand celui-ci est un véhicule de particulier ou
- du voyage dudit véhicule par lequel les voyageurs pénètrent dans la zone contrôlée quand celui-ci est un moyen de transport collectif.

Ainsi, dans le cas de véhicules de particuliers, les identifiants de véhicules p₁,...,pₙ sont avantageusement le numéro de plaque d'immatriculation du véhicule, car tous les véhicules présentent une plaque d'immatriculation et peuvent ainsi être identifiés de manière unique.

Selon des modes de réalisations alternatifs, les identifiants peuvent être également un identifiant de carte d'autoroute associée au véhicule, un numéro de série de pièces du moteur, etc. Un identifiant de moyen de transport peut également comprendre une combinaison de plusieurs données d'identification comme les données précitées.

Dans le cas de véhicules non individuels, les identifiants de véhicules p₁,...,pₙ sont avantageusement et de façon non exhaustive : un numéro de vol, un numéro de train, un numéro de voyage, ou tout identifiant du voyage opéré par le moyen de transport collectif concerné.

L'ensemble de secondes données D2 peut également comprendre, outre des données identitaires certifiées, des informations relatives aux autorisations d'accès des individus à l'intérieur ou à l'extérieur de la zone contrôlée, ces informations pouvant qualifier par exemple le droit de passer à travers la zone ou de résider dans la zone, et éventuellement les mesures à prendre vis-à-vis du passager lorsqu'il se présente au point de passage et les protocoles de vérification supplémentaires à lui appliquer le cas échéant. Par exemple, il peut s'agir d'une base de données nationale faisant état de l'autorisation d'entrer sur le territoire.

L'ensemble D2 comprend alors des profils d'identité d'individus ID₁,...IDₘ associés avec, pour chaque individu, des informations relatives aux accès vis-à-vis du passage à l'intérieur ou à l'extérieur de la zone contrôlée a₁,...aₘ. Chaque aᵢ peut prendre différentes valeurs, par exemple, mais non limitativement, oui ou non, 1 ou 0, etc., s'il s'agit de signifier respectivement une autorisation ou une interdiction de pénétrer dans la zone.

L'ensemble de données identitaires certifiées D2 comprend avantageusement des profils de l'ensemble des personnes déjà entrées ou sorties de la zone contrôlée, ou ayant déjà effectué un enrôlement dans le système en préparation d'une entrée ou une sortie de la zone.

Avantageusement, un profil d'identité d'un individu est généré dans cet ensemble, et associé à une autorisation d'accès à la zone, lors ou avant une entrée de l'individu dans la zone contrôlée, et le procédé de contrôle décrit ci-après est mis en oeuvre lors de la sortie de l'individu de la zone.

Un profil d'identité d'un individu comprend au moins une donnée biométrique de l'individu. Il peut notamment s'agir d'une image de visage ou d'une capture d'empreinte digitale, ou bien encore d'une image d'iris. Cette donnée biométrique a été acquise directement sur l'individu, ou sur un document d'identité de l'individu, étant entendu que, dans ce deuxième cas, lors de l'enrôlement de l'individu dans cet ensemble de données D2, une donnée biométrique acquise sur l'individu est comparée avec la donnée biométrique acquise sur le document d'identité, pour limiter les risques de fraude, l'une ou l'autre ou les deux données étant ensuite enregistrées dans l'ensemble D2.

Le profil d'identité comprend aussi au moins une donnée d'identité pouvant être obtenue sur un document d'identité de l'individu, comme par exemple un numéro de passeport ou de carte d'identité, ou les noms, prénoms et date de naissance de l'individu.

Les données des deux ensembles peuvent avantageusement être enregistrées dans une ou plusieurs bases de données par tous moyens permettant de conserver la confidentialité des informations telles que par exemple le partage d'informations secrètes, l'encodage ou l'encryptage desdites données.

Selon un premier mode de réalisation, les deux ensembles de données sont enregistrés dans une base de données commune. Alternativement, les données identitaires et les données de passage sont stockées respectivement dans deux bases de données DB1 et DB2, comme illustré dans la figure 1.

Le système comprend également au moins un capteur de données biométriques 11, représenté schématiquement par une caméra, pour acquérir par exemple une image de visage d'un passager, mais qui est avantageusement un capteur de donnée biométrique à la volée, et de préférence un capteur d'image d'iris ou un capteur d'empreinte digitale à la volée.

Un tel capteur peut être par exemple le capteur MORPHO IAD™, qui permet d'acquérir une image d'iris ou de visage en moins d'une seconde et à une distance d'environ un mètre de l'individu. Ceci permet notamment d'acquérir une image d'iris d'un passager d'un véhicule, sans que celui n'en descende.

Un autre capteur peut être le capteur « Finger on the Fly » de Morpho qui permet d'acquérir une empreinte digitale à la volée, également sans contraindre des passagers d'un véhicule à en descendre pour procéder à l'acquisition.

Avantageusement et si nécessaire, le capteur comprend un deuxième capteur biométrique tel qu'un capteur d'iris ou un capteur d'image de visage, d'empreinte digitale, de paume, de réseau veineux dont l'utilisation est détaillée ci-après.

Le système comprend également un dispositif d'acquisition 12 d'un identifiant d'un moyen de transport ou de voyage. Dans le cas où l'identifiant de moyen de transport ou de voyage est un numéro, tel qu'un numéro de plaque d'immatriculation, ou un code-barres, un code-barres 2D, tel que le code QR, ou de façon alternative une image ou toute autre représentation 2D ou 3D, le dispositif 12 peut être une caméra ou un appareil photo complété d'un système de traitement d'images pour détecter ledit identifiant de moyen de transport ou de voyage (par ex. : le numéro de plaque d'immatriculation pour un véhicule automobile, ...).

Le système comprend en outre un dispositif de lecture d'un document d'identité, non représenté sur la figure. Ce système peut acquérir un numéro d'identité figurant sur un tel document, et éventuellement une ou plusieurs données biométriques enregistrées dans le document ou dans une puce électronique, telles que par exemple une image du visage ou une empreinte digitale d'un individu. Le dispositif de lecture peut en outre comprendre des moyens de vérification de l'authenticité du document d'identité présenté.

Enfin, le système 1 comprend une unité de traitement 13, comprenant des moyens de calcul, par exemple un processeur, et qui est adaptée pour commander le ou les capteurs biométriques, le dispositif de lecture d'un document d'identité et le dispositif 12 d'acquisition de l'identifiant d'un véhicule.

L'unité de traitement 13 est en outre adaptée pour communiquer avec la ou les bases de données DB1, DB2 comprenant les ensembles de données D1, D2, en lecture ou en écriture. A cet égard, la ou les bases de données peuvent se trouver physiquement sur le site du poste de contrôle, ou au contraire à distance de celui-ci. Dans ce dernier cas, l'unité de traitement 13 peut accéder à chaque base de données via un réseau de télécommunication tel qu'Internet.

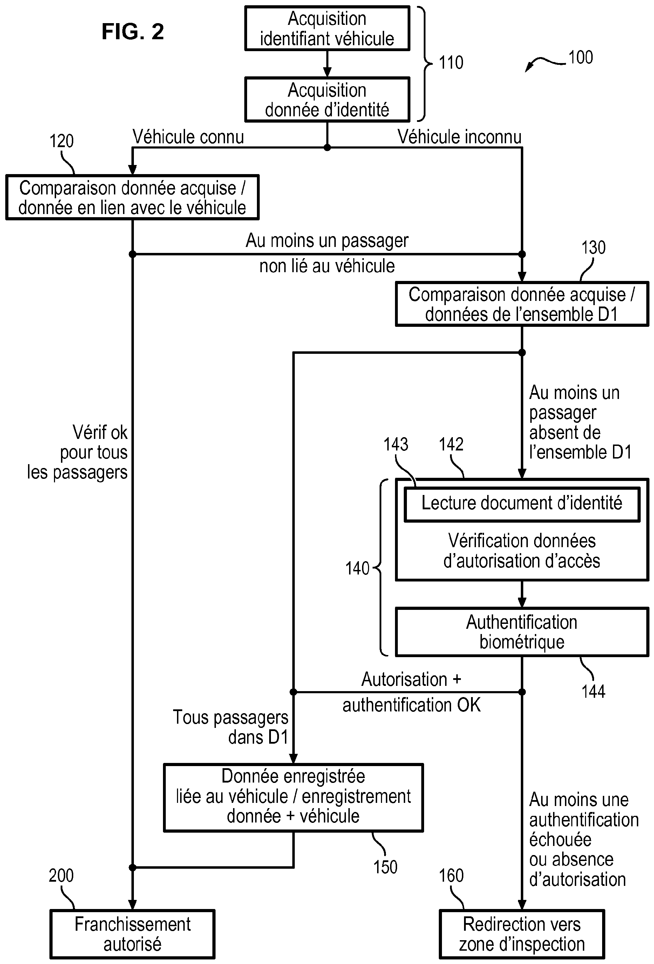

L'unité de traitement 13 est adaptée à la mise en oeuvre du procédé de contrôle décrit ci-après en référence à la figure 2, par exécution d'instructions de code dédiées.

### Procédé de contrôle

Le procédé de contrôle 100 de passagers d'un véhicule est mis en oeuvre pour chaque véhicule franchissant un poste de contrôle 10 situé à l'entrée ou la sortie d'une zone d'accès contrôlé.

Il peut être mis en oeuvre de manière systématique sur l'ensemble des passagers de l'ensemble des véhicules. Cependant, pour augmenter la rapidité et l'efficacité du système, dans le cas où le véhicule est une automobile ou un poids lourd (camion, etc.), il est préférable de traiter le ou les deux passagers assis sur les sièges avant du véhicule. En effet, à titre d'exemple, le nombre moyen de passagers dans les voitures franchissant la frontière américaine est de 1,8 environ. En contrôlant deux passagers par véhicule on peut donc traiter une proportion important des passagers transitant par le poste de contrôle.

Une première étape du procédé de contrôle comprend l'acquisition 110 d'un identifiant du véhicule par le dispositif d'acquisition 12. Cette acquisition est réalisée de préférence à la volée, lors du passage d'un véhicule au pas dans une zone de contrôle dans laquelle le système est installé.

Simultanément ou non, un capteur biométrique 11 acquiert une donnée biométrique d'un ou plusieurs passagers du véhicule, de préférence du ou des deux passagers assis sur les sièges avant. Cette acquisition est réalisée de préférence à la volée pour que les passagers n'aient pas à descendre de la voiture, voire n'aient pas à arrêter la voiture, mais seulement à la faire ralentir pour procéder à l'acquisition.

Une fois l'identifiant du véhicule et une donnée biométrique acquise pour le ou les passagers, ces données sont transmises à l'unité de traitement 13 qui accède à l'ensemble des premières données D1 de vérification de passage.

L'unité de traitement 13 vérifie au cours d'une étape 120, que le véhicule correspondant à l'identifiant acquis est enregistré dans cet ensemble de données D1.

Si c'est le cas, l'unité de traitement 13 vérifie que chaque passager dont a été acquise une donnée biométrique est enregistré dans la base en lien avec l'identifiant du véhicule.

Le fait d'associer dans la base de données les passagers aux véhicules permet de limiter le nombre de comparaisons qui sont nécessaires pour réaliser cette vérification. Par exemple, pour un véhicule appartenant à un particulier, le nombre d'individus associés est généralement inférieur à 10. Le nombre de comparaisons entre la donnée d'un passager et les passagers enregistrés avec le véhicule est donc inférieur à 10.

Pour une voiture de location, ce nombre peut être plus élevé car la voiture peut être louée successivement à un grand nombre de personnes. Dans ce cas, l'unité de traitement 13 peut mettre en oeuvre un procédé de rafraichissement en supprimant de l'ensemble D1 les données des individus enregistrés en lien avec le véhicule depuis une date trop ancienne, ou peut supprimer les données les plus anciennes une fois qu'un seuil en nombre de données enregistrées en lien avec le véhicule a été dépassé.

Si chaque passager du véhicule dont une donnée d'identité a été acquise est enregistré dans l'ensemble D1 de données de vérification de passage en lien avec le véhicule, le franchissement de la frontière de la zone accès contrôlé est autorisé au cours d'une étape 200.

Si en revanche au moins l'un des passagers du véhicule n'est pas enregistré dans cet ensemble en lien avec ce véhicule, ou si l'identifiant du véhicule n'est pas enregistré dans la base, l'unité de traitement 13 détermine, pour chaque passager non lié au véhicule dans la base, lors d'une étape 130, si chacun de ces passagers est enregistré dans l'ensemble D1 en lien avec un autre véhicule, par comparaison de la donnée d'identité acquise sur un passager avec l'ensemble des n données d'identité de la base, à l'exception le cas échéant des données d'identité associées au véhicule dans lequel se trouvent les passagers, puisque ces données ont déjà été comparées à la donnée du passager.

L'ensemble des comparaisons de la donnée biométrique de l'individu avec les données de l'ensemble D1, notamment dans le cas où les données sont des images d'iris ou d'empreintes digitales, peut être réalisé en des temps limités inférieurs typiquement à environ 10 secondes par la mise en oeuvre d'algorithmes connus de l'homme de l'art.

Si une donnée acquise sur un passager correspond à une donnée de l'ensemble D1 en lien avec un autre véhicule, l'unité de traitement 13 procède à une étape 150 de mise à jour des données de vérification de passage dans la base de données. Cette mise à jour comprend :
- si l'identifiant du véhicule ne se trouve pas dans les premières données D1, l'enregistrement de l'identifiant du véhicule dans l'ensemble D1 et la génération d'un lien entre l'identifiant du véhicule et des données des passagers déjà comprises dans l'ensemble D1
- si l'identifiant du véhicule se trouve dans les premières données, mais n'est pas lié aux données des passagers, l'enregistrement de chaque donnée des passagers en lien avec ledit identifiant, ou la génération d'un lien entre l'identifiant du véhicule et des données des passagers déjà comprises dans l'ensemble D1.

Si en revanche la donnée acquise sur l'un des passagers ne correspond à aucune donnée biométrique de vérification de passage, l'unité de traitement 13 procède à une étape 140 de vérification que le passager est enrôlé auprès de l'ensemble D2 de données identitaires certifiées, et le cas échéant vérifie les informations d'autorisation d'accès et les mesures à appliquer.

En premier lieu, l'unité de traitement 13 accède au profil du passager dans l'ensemble D2 de secondes données (données identitaires certifiées) au cours d'une étape 142, pour contrôler l'état d'autorisation d'accès à la zone associé au passager.

Selon un premier mode de réalisation, un lecteur de document d'identité du système effectue une lecture 143 d'un document d'identité de chaque passager restant à contrôler au titre de cette étape, pour obtenir une donnée d'identification du document d'identité. Cette donnée d'identification est avantageusement un numéro de carte d'identité ou de passeport. On peut y ajouter d'autres informations issues de l'ensemble des nom, prénoms, date et éventuellement lieu de naissance du passager afin de compenser une éventuelle erreur de lecture du numéro de passeport comme décrit ci-après.

Ces données permettent de retrouver chaque passager très rapidement dans la base, par comparaison avec des données correspondantes figurant dans les profils d'identité enregistrés. Cette comparaison peut se faire soit de manière simple en comparant de manière stricte les chaînes de caractère en question (notamment l'identifiant du titre d'identité), soit de manière plus complexe en établissant un score de vraisemblance en ce qui concerne la correspondance des données lues par rapport aux données enregistrées, par des moyens et logiciels de « résolution d'identité » (ou « name matching » en anglais). Dans ce deuxième cas un ou plusieurs enregistrements candidats sont récupérés si leur score de vraisemblance est supérieur à un certain seuil défini au préalable et la comparaison pourra se faire sur l'enregistrement ayant le meilleur score ou bien sur l'ensemble des candidats. Cette possibilité permet de compenser des erreurs éventuelles de lecture.

Une fois que l'unité de traitement 13 a accédé au profil d'identité du passager dans l'ensemble D2 de données identitaires certifiées, et a vérifié le cas échéant les données d'accès du passager, l'unité effectue, au cours d'une étape 144, une authentification biométrique du passager, pour contrôler qu'il n'a pas usurpé l'identité, par un faux document, de la personne enregistrée dans la base. L'ordre de réalisation décrit ci-dessus des étapes d'authentification et de vérification des informations d'accès peut être inversé selon les applications (étape d'authentification survenant avant celle de vérification des informations d'accès).

Cette authentification biométrique est réalisée par acquisition d'une donnée biométrique correspondant à un trait biométrique de même nature que la donnée biométrique enregistrée dans le profil d'identité.

Il s'agit de préférence d'une capture d'empreinte digitale ou d'une image de visage de l'individu.

En variante, le procédé peut exploiter le principe « d'identité dérivée ». Lors d'un enrôlement de l'individu dans l'ensemble de données identitaires certifiées D2, deux données biométriques correspondant à des traits biométriques distincts sont acquises sur l'individu. Par exemple, une première donnée biométrique est une image de visage ou d'empreintes digitales, et l'autre est une image d'iris.

Une authentification est réalisée par comparaison d'une première donnée biométrique avec une donnée biométrique capturée sur l'individu, éventuellement complétée par la même donnée enregistrée dans le document d'identité, puis la deuxième donnée biométrique est enregistrée dans le profil.

Dans ce cas, lors de l'étape 144, il n'est plus nécessaire de procéder à une acquisition de donnée biométrique supplémentaire pour l'authentification par rapport à la donnée biométrique identitaire enregistrée dans l'ensemble D2, puisque la donnée acquise (par exemple l'image d'iris) lors de l'étape 110 peut être utilisée pour procéder à l'authentification directement sur cette donnée.

Si l'authentification du passager se fait avec succès et le cas échéant si l'information d'accès le permet, alors l'unité de traitement 13 met en oeuvre une mise à jour 150 de l'ensemble D1 de premières données, en enregistrant dans celui-ci la donnée biométrique du passager en lien avec l'identifiant du véhicule, c'est-à-dire en enrôlant ce passager en lien avec l'identifiant du véhicule dans l'ensemble de premières données D1.

Si en revanche l'authentification a échoué, ou que le cas échéant l'information d'accès du passager ne permet pas son passage sans vérification supplémentaire, ou que le contrôle n'a pas pu avoir lieu car le passager ne dispose pas de document d'identité, le véhicule est dirigé au cours d'une étape 160 vers une zone d'inspection.

Alternativement, au cours de l'étape 144, l'unité de traitement 13 peut rechercher l'individu dans l'ensemble de données D2 par identification de celui-ci en comparant une donnée biométrique acquise sur celui-ci (lors de l'étape 110 ou lors d'une nouvelle capture à l'étape 144, en fonction de la nature du trait biométrique correspondant) avec l'ensemble des données biométriques enregistrées dans l'ensemble D2 de données certifiées.

Comme précédemment, si un passager du véhicule n'a pas été identifié comme un individu de l'ensemble D2 de données identitaires certifiées, le véhicule est dirigé au cours de l'étape 160 vers la zone d'inspection.

Selon encore un autre mode de réalisation, un passager possède un document d'identité comprenant une donnée biométrique (par exemple enregistrée sur une puce intégrée au document). Cette donnée biométrique peut être considérée comme une donnée identitaire certifiée appartenant à l'ensemble D2 puisque, lors de la création du document d'identité, l'individu a été identifié et sa donnée biométrique a été certifiée pour être enregistrée dans ce document.

Dans ce cas, l'étape 144 d'authentification est réalisée en comparant une donnée biométrique acquise sur un passager avec une donnée biométrique enregistrée dans son document d'identité.

### Cas d'un enrôlement préalable dans l'ensemble de premières données D1 du système de contrôle

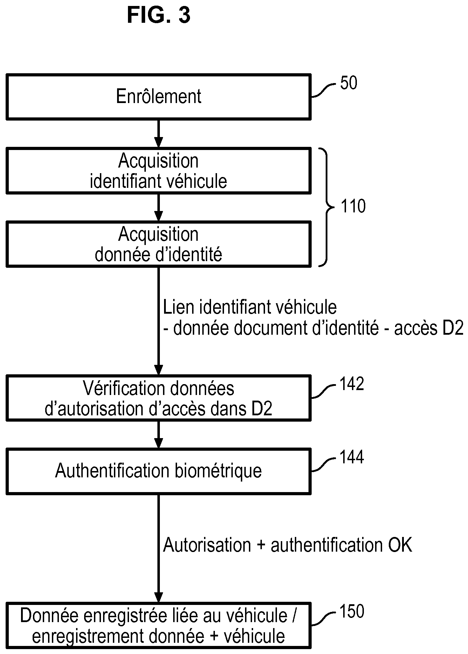

En référence à la figure 3, on a représenté une adaptation du procédé pour un passager d'un véhicule qui procède à un enrôlement préalable dans l'ensemble de données de vérification de passage D1 du système 1 afin d'accélérer l'entrée ou la sortie de la zone.

Cet enrôlement préalable peut avantageusement être réalisé à distance, via un réseau de télécommunications comme Internet.

L'étape d'enrôlement 50 comprend l'enregistrement, dans l'ensemble de premières données D1, d'un identifiant du véhicule utilisé en lien avec une donnée d'un document d'identité. Par exemple l'étape d'enrôlement peut comprendre l'acquisition d'informations du type numéro de document d'identité, données d'état civil, etc., qui sont apparentes sur un document d'identité.

De cette façon, l'ensemble de premières données D1 comprend un identifiant du véhicule, associé à des données d'identité d'un ou quelques (par exemple moins de 10) individus.

Dans ce cas, l'étape 110 d'acquisition d'un identifiant du véhicule et d'une donnée biométrique des passagers permet d'obtenir, dans l'ensemble de premières données D1, en accédant à l'identifiant du véhicule enregistré, une ou plusieurs données de documents d'identité enregistrées en lien avec cet identifiant.

L'unité de traitement 13 peut alors accéder directement au profil du passager enregistré dans les informations identitaires certifiées D2 grâce aux informations du document d'identité ainsi obtenues, et contrôler 142 les données d'accès du passager. On s'affranchit donc de l'étape de lecture d'un document d'identité.

L'étape 144 comprend alors l'authentification biométrique de chaque passager par comparaison de la donnée biométrique acquise sur l'individu avec la donnée enregistrée dans son profil (lorsque plusieurs passagers ont été préalablement enrôlés en lien avec le véhicule, cette authentification est plus exactement une identification « 1 : few » entre chaque passager et les quelques profils des passagers enregistrés dans les informations identitaires certifiées D2), s'il s'agit de données correspondant à des traits biométriques de même nature (par exemple image d'iris), ou par acquisition d'une nouvelle donnée biométrique sur un trait biométrique correspondant à la donnée biométrique certifiée enregistrée dans l'ensemble D2, ou encore par l'exploitation du principe d'identité dérivée décrit ci-avant.

L'enrôlement permet donc d'accélérer le premier contrôle, puisque dans ce cas, pour les passagers qui ne sont pas encore enregistrés dans la première base de données en lien avec le véhicule utilisé, les étapes de contrôle de l'autorisation d'accès sont réalisées plus rapidement.

Le procédé proposé présente donc de nombreux avantages.

Au fur et à mesure du franchissement de cette étape de contrôle par un nombre croissant d'individus, l'ensemble de premières données D1 est complété. Ceci permet de faire passer de plus en plus rapidement un nombre croissant de personnes, puisque le contrôle se résume alors au contrôle des informations dans cette base de données.

Enfin, dans le cas où le procédé est mis en oeuvre à la sortie d'une zone, la seconde base de données comprenant les informations relatives à l'entrée dans la zone des individus, le procédé permet également de réconcilier les informations entre l'entrée et la sortie de la zone pour un même individu, en évaluant par exemple le temps écoulé entre l'inscription dans la seconde base de données DB2 et la sortie de la zone.

## Revendications

1. Procédé (100) de contrôle d'individus à l'entrée ou la sortie d'une zone contrôlée, mis en oeuvre dans un système (1) comprenant au moins une base de données comprenant :
- un ensemble de premières données (D1) dites de vérification de passage, comprenant des données biométriques d'individus (b₁,...,bₙ) en lien avec des identifiants de moyens de transport ou de voyages (p₁,...,pₙ), et
- un ensemble de secondes données (D2) dites données identitaires certifiées comprenant au moins une donnée d'état civil et/ou de document d'identité et au moins une donnée biométrique d'individus,
le procédé étant **caractérisé par** la mise en oeuvre des étapes consistant à :
- pour chaque véhicule, acquérir (110) un identifiant de moyen de transport ou de voyage, et une donnée biométrique de vérification de passage d'au moins un passager du véhicule,
- pour chaque passager pour lequel une donnée biométrique de vérification de passage a été acquise, déterminer (120) si ledit passager est enregistré sur l'ensemble de données (D1) de vérification de passage en lien avec le véhicule, et si ladite détermination est positive pour chacun de ces passagers, autoriser (200) l'entrée ou la sortie de la zone contrôlée sans se référer à des données d'état civil et/ou de document d'identité,
- si un passager n'est pas enregistré dans l'ensemble de données (D1) de vérification de passage en lien avec le véhicule, vérifier (130) que le passager est enregistré dans ledit ensemble (D1) en lien avec un autre véhicule, ou, à défaut, vérifier (140) qu'il est enregistré dans l'ensemble de données identitaires certifiées (D2), cette dernière vérification comprenant une authentification biométrique (144) dudit passager par comparaison d'une donnée biométrique d'authentification du passager à une donnée biométrique du passager présente dans l'ensemble de données identitaires certifiées (D2) acquise sur un trait biométrique de même nature,
- si le résultat de l'une des vérifications précédentes (130, 140) est positive, mettre à jour (150) l'ensemble de données de vérification de passage (D1) de sorte qu'il comprenne une donnée biométrique du passager en lien avec le véhicule.

2. Procédé de contrôle (100) selon la revendication 1, dans lequel la donnée biométrique de chaque passager est acquise à la volée.

3. Procédé de contrôle (100) selon la revendication 2, dans lequel la donnée biométrique acquise à la volée est une image d'iris.

4. Procédé de contrôle (100) selon l'une des revendications précédentes, dans lequel la vérification (130) que l'individu est enregistré dans l'ensemble (D1) de premières données en lien avec un autre véhicule comprend la mise en oeuvre d'une étape de comparaison entre la donnée d'identité du passager et l'ensemble des données d'identité stockées dans ledit ensemble.

5. Procédé de contrôle (100) selon l'une des revendications 1 à 4, comprenant en outre, préalablement à l'étape d'authentification biométrique (144), l'acquisition d'une donnée d'un document d'identité du passager, et l'accès à une donnée biométrique identitaire certifiée du passager dans l'ensemble (D2) de secondes données par comparaison entre ladite donnée du document d'identité et une donnée de document d'identité de l'ensemble (D2) de secondes données.

6. Procédé de contrôle selon la revendication qui précède, dans lequel les données de documents d'identité comparées comprennent chacune une chaine de caractères, et la comparaison mise en oeuvre comprend l'établissement d'un score de vraisemblance entre des données comparées, et la comparaison du score à un seuil prédéterminé.

7. Procédé de contrôle selon l'une des revendications 1 à 4, dans lequel l'ensemble (D2) de secondes données comprend des données biométriques enregistrées dans des documents d'identité d'individus, et l'étape (144) d'authentification biométrique est mise en oeuvre par comparaison d'une donnée biométrique acquise sur l'individu avec une donnée biométrique identitaire certifiée stockée dans un document d'identité dudit individu.

8. Procédé de contrôle (100) selon l'une des revendications 1 à 4, dans lequel la vérification (140) du fait qu'un passager est enregistré dans l'ensemble (D2) de secondes données si le passager n'est pas enregistré dans l'ensemble (D1) de premières données comprend l'identification biométrique du passager par comparaison entre une donnée biométrique acquise sur l'individu et les données biométriques identitaires certifiées enregistrées dans l'ensemble de secondes données (D2).

9. Procédé de contrôle (100) selon l'une des revendications 1 à 8, comprenant une étape (160) consistant à diriger le véhicule vers une zone d'inspection dans les cas où l'ensemble de secondes données (D2) ne comprend pas de données concernant un passager, ou un passager ne dispose d'aucun document d'identité, ou dont une authentification biométrique a échoué.

10. Procédé de contrôle (100) selon l'une des revendications qui précèdent, dans lequel l'étape de mise à jour (150) de l'ensemble de premières données (D1) comprend l'enregistrement d'un identifiant du véhicule en lien avec une donnée biométrique du passager déjà enregistrée dans ledit ensemble, ou l'enregistrement de la donnée biométrique du passager et de l'identifiant du véhicule, en lien avec la donnée.

11. Procédé de contrôle (100) selon l'une des revendications précédentes, mis en oeuvre à la sortie d'une zone contrôlée, dans lequel chaque passager est enrôlé dans l'ensemble de secondes données (D2) lors d'une entrée des individus dans ladite zone.

12. Procédé de contrôle (100) selon l'une des revendications précédentes, le procédé étant appliqué à l'un ou aux deux passagers des sièges avant d'un véhicule du type automobile.

13. Procédé de contrôle (100) selon l'une des revendications précédentes, comprenant en outre la suppression de données d'identité de vérification de passage lorsque ces données ont été associées à un véhicule ou un voyage pendant un laps de temps excédent un seuil prédéterminé, ou lorsque le nombre de données d'identité associées à un véhicule ou un voyage excède un seuil prédéterminé.

14. Système de contrôle (1) d'individu(s) dans un véhicule à l'entrée ou la sortie d'une zone contrôlée, comprenant :
- au moins une base de données (DB1, DB2) comprenant :
∘ un ensemble de premières données (D1) dites de vérification de passage, comprenant au moins des données biométriques d'individus (b₁,...,bₙ) en lien avec des identifiants de moyens de transport ou de voyages (p₁,...,pₙ),
∘ un ensemble de secondes données (D2) dites « données identitaires certifiées » comprenant au moins des données d'état civil, de documents d'identité et biométriques d'individus, l'ensemble de secondes données (D2) comprenant notamment des données biométriques identitaires certifiées,
- au moins un capteur de données biométriques (11), apte à acquérir des données biométriques de même nature que les données biométriques identitaires certifiées,
- un dispositif d'acquisition d'un identifiant de moyen de transport ou de voyage (12), et
- une unité de traitement (13), configurée pour commander le capteur et pour communiquer la base de données, pour mettre en oeuvre le procédé selon l'une des revendications qui précèdent.

15. Système de contrôle (1) selon la revendication qui précède, dans lequel les ensembles de premières et secondes données (D1, D2) sont stockés dans des bases de données disjointes (DB1, DB2).

16. Système de contrôle (1) selon l'une des revendications 14 ou 15, dans lequel le capteur de données biométriques (11) est un capteur biométriques à la volée de traits biométriques comprenant : une image d'iris, de rétine, d'empreinte digitale, de paume, de réseau veineux, de visage ou de voix.

17. Procédé d'enrôlement préalable (50) d'un individu dans un système (1) selon l'une des revendications 14 à 16, le procédé comprenant l'enregistrement dans l'ensemble de premières données (D1) d'un identifiant du véhicule de l'individu en lien avec une donnée d'identité dudit individu.

18. Produit programme d'ordinateur, comprenant des instructions de code adaptées pour la mise en oeuvre du procédé selon l'une des revendications 1 à 13, lorsqu'elles sont exécutées par une unité de traitement (13).

## Patentansprüche

1. Verfahren (100) zur Kontrolle von Einzelpersonen beim Zugang zu oder Verlassen eines kontrollierten Bereichs, das in einem System (1) durchgeführt wird, das mindestens eine Datenbank umfasst, die Folgendes umfasst:
- eine Menge von ersten, sogenannten Durchgangsprüfungsdaten (D1), die biometrische Daten von Einzelpersonen (b₁, ..., bₙ) in Verbindung mit Kennungen von Transportmitteln oder Reisen (p₁, ..., pₙ) umfassen, und
- eine Menge von zweiten, sogenannten zertifizierten Identitätsdaten (D2), die mindestens ein Personendaten- und/oder Identitätsdokumentsdatenelement und mindestens ein biometrisches Datenelement von Einzelpersonen umfasst,
wobei das Verfahren durch die Durchführung der Schritte gekennzeichnet ist, die aus Folgendem bestehen:
- für jedes Fahrzeug, Erfassen (110) einer Kennung des Transportmittels oder der Reise und eines biometrischen Durchgangsprüfungsdatenelements von mindestens einem Passagier des Fahrzeugs,
- für jeden Passagier, für den ein biometrisches Durchgangsprüfungsdatenelement erfasst wurde, Bestimmen (120), ob der Passagier in der Menge von Durchgangsprüfungsdaten (D1) in Verbindung mit dem Fahrzeug gespeichert ist, und, wenn die Bestimmung für jeden dieser Passagier positiv ist, Genehmigen (200) des Zugangs zu oder Verlassens des kontrollierten Bereichs, ohne Bezugnahme auf die Personen- und/oder Identitätsdokumentsdaten,
- wenn ein Passagier nicht in der Menge von Durchgangsprüfungsdaten (D1) in Verbindung mit dem Fahrzeug gespeichert ist, Prüfen (130), dass der Passagier in der Menge (D1) in Verbindung mit einem anderen Fahrzeug gespeichert ist, oder anderenfalls Prüfen (140), dass er in der Menge von zertifizierten Identitätsdaten (D2) gespeichert ist, wobei diese letztere Prüfung eine biometrische Authentifizierung (144) des Passagiers durch Vergleich eines biometrischen Authentifizierungsdatenelements des Passagiers mit einem in der Menge von zertifizierten Identitätsdaten (D2) vorhandenen biometrischen Datenelement des Passagiers umfasst, das auf einem biometrischen Merkmal der gleichen Art erfasst wurde,
- wenn das Ergebnis von einer der vorhergehenden Prüfungen (130, 140) positiv ist, Aktualisieren (150) der Menge von Durchgangsprüfungsdaten (D1), derart dass sie ein biometrisches Datenelement des Passagiers in Verbindung mit dem Fahrzeug umfasst.

2. Kontrollverfahren (100) nach Anspruch 1, wobei das biometrische Datenelement von jedem Passagier im selben Zuge erfasst wird.

3. Kontrollverfahren (100) nach Anspruch 2, wobei das im selben Zuge erfasste biometrische Datenelement ein Irisbild ist.

4. Kontrollverfahren (100) nach einem der vorhergehenden Ansprüche, wobei die Prüfung (130), dass die Einzelperson in der Menge von ersten Daten (D1) in Verbindung mit einem anderen Fahrzeug gespeichert ist, das Durchführen eines Schritts zum Vergleichen zwischen dem Identitätsdatenelement des Passagiers und der in der Menge gespeicherten Menge von Identitätsdaten umfasst.

5. Kontrollverfahren (100) nach einem der Ansprüche 1 bis 4, das ferner vor dem Schritt der biometrischen Authentifizierung (144) die Erfassung eines Datenelements eines Identitätsdokuments des Passagiers und den Zugriff auf ein zertifiziertes biometrisches Identitätsdatenelement des Passagiers in der Menge von zweiten Daten (D2) durch Vergleich zwischen dem Identitätsdokumentsdatenelement und einem Identitätsdokumentsdatenelement von der Menge von zweiten Daten (D2) umfasst.

6. Kontrollverfahren nach dem vorhergehenden Anspruch, wobei die verglichenen Identitätsdokumentsdaten jeweils eine Zeichenfolge umfassen und der durchgeführte Vergleich die Festlegung einer Wahrscheinlichkeitspunktzahl zwischen den verglichenen Daten und den Vergleich der Punktzahl mit einem vorbestimmten Schwellenwert umfasst.

7. Kontrollverfahren nach einem der Ansprüche 1 bis 4, wobei die Menge von zweiten Daten (D2) in den Identitätsdokumenten von Einzelpersonen gespeicherte biometrische Daten umfasst, und der Schritt (144) zur biometrischen Authentifizierung durch Vergleich eines bei der Einzelperson erfassten biometrischen Datenelements mit einem in dem Identitätsdokument der Einzelperson gespeicherten zertifizierten biometrischen Identitätsdatenelement durchgeführt wird.

8. Kontrollverfahren (100) nach einem der Ansprüche 1 bis 4, wobei die Prüfung (140) der Tatsache, dass ein Passagier in der Menge von zweiten Daten (D2) gespeichert ist, wenn der Passagier nicht in der Menge von ersten Daten (D1) gespeichert ist, die biometrische Identifikation des Passagiers durch Vergleich zwischen einem biometrischen Datenelement, das von der Einzelperson erfasst wurde, und den in der Menge von zweiten Daten (D2) gespeicherten zertifizierten biometrischen Identitätsdaten umfasst.

9. Kontrollverfahren (100) nach einem der Ansprüche 1 bis 8, das einen Schritt (160) umfasst, der darin besteht, das Fahrzeug in dem Fall, in dem die Menge von zweiten Daten (D2) keine Daten umfasst, die einen Passagier betreffen, oder ein Passagier über kein Identitätsdokument verfügt, oder bei dem eine biometrische Authentifizierung fehlgeschlagen ist, zu einem Untersuchungsbereich zu leiten.

10. Kontrollverfahren (100) nach einem der vorhergehenden Ansprüche, wobei der Schritt zur Aktualisierung (150) der Menge von ersten Daten (D1) die Aufzeichnung einer Kennung des Fahrzeugs in Verbindung mit einem bereits in der Menge gespeicherten biometrischen Datenelement des Passagiers oder die Aufzeichnung des biometrischen Datenelements und der Kennung des Fahrzeugs in Verbindung mit dem Datenelement umfasst.

11. Kontrollverfahren (100) nach einem der vorhergehenden Ansprüche, das beim Verlassen eines kontrollierten Bereichs durchgeführt wird, wobei jeder Passagier bei einem Zugang der Einzelpersonen zu dem Bereich in die Menge von zweiten Daten (D2) aufgenommen wird.

12. Kontrollverfahren (100) nach einem der vorhergehenden Ansprüche, wobei das Verfahren auf einen oder beide Passagiere der Vordersitze eines Fahrzeugs vom Typ Automobil angewandt wird.

13. Kontrollverfahren (100) nach einem der vorhergehenden Ansprüche, das ferner die Beseitigung von Durchgangsprüfungsidentitätsdaten umfasst, wenn diese Daten während eines Zeitraums, der einen vorbestimmten Schwellenwert überschreitet, mit einem Fahrzeug oder einer Reise verknüpft waren, oder wenn die Anzahl der mit einem Fahrzeug oder einer Reise verknüpften Identitätsdaten einen vorbestimmten Schwellenwert überschreitet.

14. System (1) zur Kontrolle von (einer) Einzelperson/en in einem Fahrzeug beim Zugang zu oder Verlassen eines kontrollierten Bereichs, das Folgendes umfasst:
- mindestens eine Datenbank (DB1, DB2), die Folgendes umfasst:
∘ eine Menge von ersten, sogenannten Durchgangsprüfungsdaten (D1), die mindestens biometrische Daten von Einzelpersonen (b₁, ..., bₙ) in Verbindung mit Kennungen von Transportmitteln oder Reisen (p₁, ..., pₙ) umfassen,
∘ eine Menge von zweiten (D2), sogenannten "zertifizierten Identitätsdaten", die mindestens Personen-, Identitätsdokuments- und biometrische Daten von Einzelpersonen umfassen, wobei die Menge von zweiten Daten (D2) insbesondere zertifizierte biometrische Identitätsdaten umfasst,
- mindestens einen Sensor (11) für biometrische Daten, der geeignet ist, biometrische Daten derselben Art wie die zertifizierten biometrischen Identitätsdaten zu erfassen,
- eine Vorrichtung zur Erfassung einer Transportmittel- oder Reisekennung (12), und
- eine Verarbeitungseinheit (13), die ausgestaltet ist, um den Sensor zu steuern und um mit der Datenbank zu kommunizieren, um das Verfahren nach einem der vorhergehenden Ansprüche durchzuführen.

15. Kontrollsystem (1) nach dem vorhergehenden Anspruch, wobei die Mengen von ersten und zweiten Daten (D1, D2) in getrennten Datenbanken (DB1, DB2) gespeichert sind.

16. Kontrollsystem (1) nach einem der Ansprüche 14 oder 15, wobei der Sensor (11) für biometrische Daten ein Sensor zur Erfassung biometrischer Merkmale im selben Zuge ist, die Folgendes umfassen: ein Bild der Iris, der Netzhaut, des Fingerabdrucks, des Handflächenabdrucks, von Venenmustern, Gesicht oder Stimme.

17. Verfahren zur vorherigen Aufnahme (50) einer Einzelperson in ein System (1) nach einem der Ansprüche 14 bis 16, wobei das Verfahren das Aufzeichnen einer Kennung des Fahrzeugs der Einzelperson in Verbindung mit einem Identitätsdatenelement der Einzelperson in der Menge von ersten Daten (D1) umfasst.

18. Computerprogrammprodukt, das Codebefehle umfasst, die für die Durchführung des Verfahrens nach einem der Ansprüche 1 bis 13 angepasst sind, wenn sie durch eine Verarbeitungseinheit (13) ausgeführt werden.

## Claims

1. A method (100) for controlling individuals upon entering or exiting a controlled area, applied in a system (1) comprising at least one database comprising:
- a set of first data (D1) so-called passage verification data, comprising biometric data of individuals (b₁,...,bₙ) in relation with identifiers of travel or transport means (p₁,...,pₙ), and
- a set of second data (D2) so-called certified identity data comprising at least one civil registration datum and/or an identity document datum and at least one biometric datum of individuals,
the method being **characterized by** the execution of out steps of:
- for each vehicle, acquiring (110) an identifier of a travel or transport means, and a biometric datum for verifying the passage of at least one passenger of the vehicle,
- for each passenger for which a biometric datum for passage verification has been acquired, determining (120) whether said passenger is recorded on the set of passage verification data (D1) in relation with the vehicle, and if said determination is positive for each of these passengers, authorizing (200) the entry or the exit of the controlled area without referring to civil registration data and/or identity document data,
- if a passenger is not recorded in the set of passage verification data (D1) in relation with the vehicle, verifying (130) that the passenger is recorded in said set (D1) in relation with another vehicle, or, by default, verifying (140) that he/she is recorded in the set of certified identity data (D2), the latter verification comprising biometric authentication (144) of said passenger by comparing a biometric datum of authentication of the passenger with a biometric datum of the passenger present in the set of certified identity data (D2) acquired on a biometric feature of the same nature,
- if the result of one of the previous verifications (130, 140) is positive, updating (150) the set of passage verification data (D1) so that it comprises a biometric datum of the passenger in relation with the vehicle.

2. The control method (100) according to claim 1, wherein the biometric datum of each passenger is acquired on the fly.

3. The control method (100) according to claim 2, wherein the biometric datum acquired on the fly is an iris image.

4. The control method (100) according to one of the preceding claims, wherein the verification (130) that the individual is recorded in the set (D1) of first data in relation with another vehicle comprises the application of a step for comparison between the identity datum of the passenger and the set of the identity data stored in said set.

5. The control method (100) according to one of claims 1 to 4, further comprising, prior to the biometric authentication step (144), the acquisition of a datum of an identity document of the passenger, and access to a certified identity biometric datum of the passenger in the set (D2) of second data by comparison between said datum of the identity document and an identity document datum of the set (D2) of second data.

6. The control method according to the preceding claim, wherein the compared data of identity documents each comprise a chain of characters, and the applied comparison comprises the determination of a likelihood score between compared data, and the comparison of the score with a predetermined threshold.

7. The control method according to one of claims 1 to 4, wherein the set (D2) of second data comprises biometric data recorded in identity documents of individuals, and the biometric authentication step (144) is applied by comparing a biometric datum acquired on the individual with a certified identity biometric datum stored in an identity document of said individual.

8. The control method (100) according to one of claims 1 to 4, wherein the verification (140) of the fact that a passenger is recorded in the set (D2) of second data if the passenger is not recorded in the set (D1) of first data comprises the biometric identification of the passenger by comparison between a biometric datum acquired on the individual and the certified identity biometric data recorded in the set of second data (D2).

9. The control method (100) according to one of claims 1 to 8, comprising a step (160) consisting of directing the vehicle to an inspection area in the cases when the set of second data (D2) does not comprise any data relating to a passenger, or when a passenger does not have any identity document, or when biometric authentication has failed.

10. The control method (100) according to one the preceding claims, wherein the step for updating (150) the set of first data (D1) comprises the recording of an identifier of the vehicle in relation with a biometric datum of the passenger already recorded in said set, or the recording of the biometric datum of the passenger and of the identifier of the vehicle, in relation with the datum.

11. The control method (100) according to one of the preceding claims, applied at the exit of a controlled area, wherein each passenger is enrolled in the set of second data (D2) upon entering of the individuals into said area.

12. The control method (100) according to one of the preceding claims, the method being applied to one or two of the passengers of the front seats of a vehicle of the automobile type.

13. The control method (100) according to one of the preceding claims, further comprising the suppression of passage verification identity data when these data have been associated with a vehicle or a travel for an elapsed time exceeding a predetermined threshold, or when the number of identity data associated with a vehicle or a travel exceeds a predetermined threshold.

14. A system for controlling (1) individuals in a vehicle upon entering or exiting a controlled area, comprising:
- at least one database (DB1, DB2) comprising:
∘ a set of first data (D1) so-called passage verification data, comprising at least biometric data of individuals (b₁,...,bₙ) in relation with identifiers of travel or transport means (p₁,...,pₙ),
∘ a set of second data (D2) so-called "certified identity data" comprising at least civil registration data, identity document data and biometric data of individuals, the set of second data (D2) comprising in particular certified identity biometric data,
- at least one biometric data sensor (11), able of acquiring biometric data of the same nature as the certified identity biometric data,
- a device for acquiring an identifier of a travel or transport means (12), and
- a processing unit (13), configured for controlling the sensor and for communicating the database, for executing the method according to one of the preceding claims.

15. The control system (1) according to the preceding claim, wherein the sets of first and second data (D1, D2) are stored in distinct databases (DB1, DB2) .

16. The control system (1) according to one of claims 14 or 15, wherein the biometric data sensor (11) is a biometric sensor on the fly of biometric features comprising: an iris, retina, fingerprint, palm, vein network, face image or voice signature.

17. A method for preliminary enrollment (50) of an individual in a system (1) according to one of claims 14 to 16, the method comprising the recording in the set of first data (D1) of an identifier of the vehicle of the individual in relation with an identity datum of said individual.

18. A computer program product, comprising code instructions adapted for executing the method according to one of claims 1 to 13, when they are executed by a processing unit (13).
